# EUROPEAN PATENT SPECIFICATION

(11) **EP 1 022 839 B1**
(45) Date of publication and mention of the grant of the patent: **25.08.2004**
(21) Application number: 99830018.0
(22) Date of filing: 21.01.1999
(51) Int. Cl.: H02J 7/00, G05F 1/56

(54) **Fully integrated linear regulator with Darlington bipolar output stage**
Vollintegrierter linearer Regler mit einer Darlington bipolaren Ausgangstufe
Régulateur linéaire complètement intégré avec étage de sortie bipolaire du type Darlington

(43) Date of publication of application: 26.07.2000
(73) Proprietor: STMicroelectronics S.r.l., 20041 Agrate Brianza (Milano) (IT)
(72) Inventor: PERILLO Leonardo, 70027 PALO DEL COLLE (IT)
(74) Representative: Modiano, Guido, Dr.-Ing.

(56) References cited:
- DE-A- 3 901 560
- US-A- 5 764 042

## Description

The present invention relates to a fully integrated linear regulator with Darlington bipolar output stage.

More particularly, the invention relates to a linear regulator with Darlington bipolar output stage which can be suitable for applications such as a floating power supply for lead batteries.

It is known that regulators of the fixed type, i.e., with a preset output voltage, are commonly used and are aimed at applications such as a floating power supply for lead batteries, usable for example for uninterruptible power supplies for electronic computers and the like.

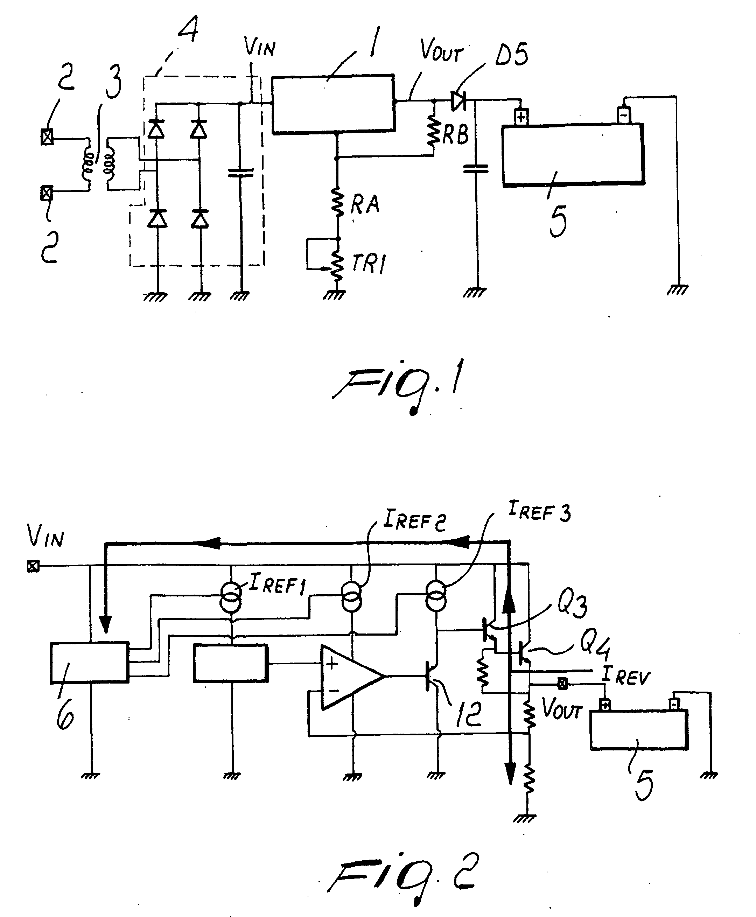

Figure 1 is a conceptual application diagram of a conventional regulator used as a floating power supply for a lead battery.

In said figure, the regulator is designated by the reference numeral 1 and is connected to a power supply mains 2 with a transformer 3 and rectifying and filtering means 4 interposed.

The output voltage of the regulator 1, designated by Vout, is set by means of a pair of resistors RA, RB and is fine-adjusted during production by means of a trimmer TR1. At the output of the regulator 1 there is also a diode D5 designed to prevent, when the input voltage Vin is floating, the battery 5 from discharging both across the pair of resistors RA and RB and across the regulator 1.

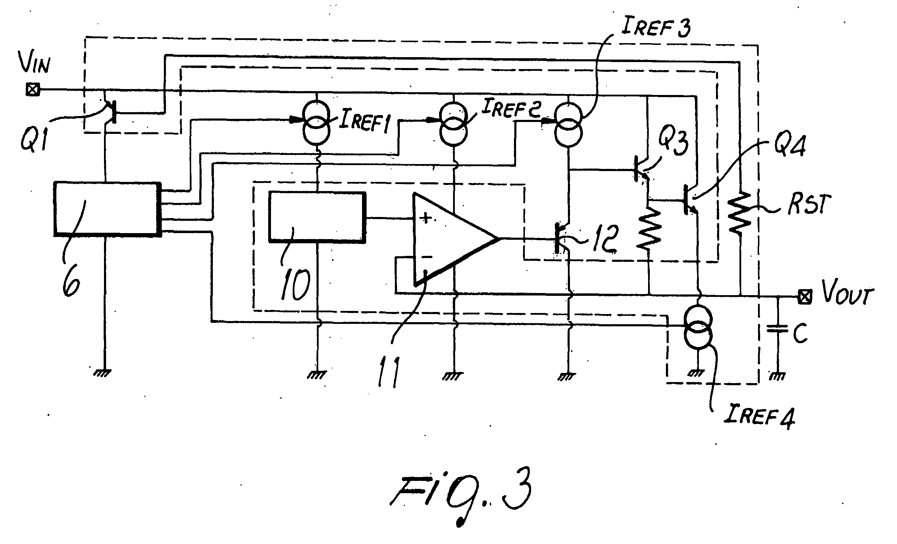

Figure 2 is a block diagram of the linear regulator 1 with an output stage provided by means of an NPN Darlington transistor.

In particular, Figure 2 is a view of the situation in which the input voltage Vin of the regulator 1 is left to float because the mains power supply is not present.

In this condition, the emitter-base junction of the NPN transistor Q3 sees a voltage which is higher than its own breakdown voltage and undergoes a Zener breakdown, because by means of the forward-biased base-collector junction it finds a DC path toward the starting circuit 6, which starts to operate and activates the current sources Iref1, Iref2 and Iref3, which begin to draw more current to the collector of the transistor Q3, thus further increasing the discharge current Iref of the battery 5.

The presence of the diode D5 arranged at the output of the regulator 1 greatly limits the discharge current Irev. However, it should be noted that such a circuit solution of the discrete type has some drawbacks.

First of all, there is the drawback of a high cost, which is due basically to the presence of the trimmer TR1 and of the large diode D5 arranged at the output of the regulator 1, which must be sized in order to withstand all the charging current of the battery. Moreover, there is the cost due to the time required to adjust the output voltage Vout.

The electrical performance of the regulator is degraded because from the thermal point of view the presence of the diode D5 in output significantly degrades the thermal coefficient of the output voltage Vout of the regulator and also drastically degrades load regulation in the variation range of the output current.

Integration of the diode D5 on the silicon (in addition to the resistors RA and RB) is not convenient, both owing to the above-mentioned problems and because it would enormously increase the silicon area due to the high current capacity required.

On the other hand, providing integrated diodes with a blocking capacity that is higher than the intended output voltage Vout can be difficult, because if it is necessary to use a low-cost bipolar type the available diodes are in any case base-emitter junctions which withstand, in reverse mode, a voltage which is certainly lower than the intended output voltage Vout of the regulator 1.
DE 39 01 560 discloses a linear regulator.
US-A-5 764 042 discloses a controlled power source.

The aim of the present invention is to provide a linear regulator with Darlington bipolar output stage which has an extremely low reverse current.

Within the scope of this aim, an object of the present invention is to provide a linear regulator with Darlington bipolar output stage which can be easily integrated with a reduced silicon area occupation.

Another object of the present invention is to provide a linear regulator with Darlington bipolar output stage whose electrical performance is similar to that offered by conventional regulators with external diode.

Another object of the present invention is to provide a linear regulator with Darlington bipolar output stage which is highly reliable, easy to provide and at competitive costs.

This aim, these objects and others which will become apparent hereinafter are achieved by a linear regulator with Darlington bipolar output stage, as defined in claim 1.
Further characteristics and advantages of the invention will become apparent from the description of a preferred but not exclusive embodiment thereof, illustrated only by way of non-limitative example in the accompanying drawings, wherein:
Figure 1 is a diagram of an application of a conventional linear regulator;
Figure 2 is a block diagram of the conventional linear regulator shown in Figure 1; and
Figure 3 is a block diagram of a linear regulator according to the present invention.

Since Figures 1 and 2 have already been described, they are not discussed further herein, with the provision that identical reference numerals in Figures 1 to 3 designate identical elements.

Therefore, to better understand the invention, Figure 3 has been given reference numerals which are identical to those of Figures 1 and 2 to indicate common elements, in order to highlight the innovative differences proposed in the present invention.

Accordingly with reference to Figure 3, which is a block diagram of a linear regulator according to the present invention, again designated by the reference numeral 1, said linear regulator is shown in the condition in which the voltage input terminal Vin is left to float, i.e., when the mains power supply is not present for any reason.

The particularity of the invention is that instead of having the external diode D5 and the two resistors RA and RB shown in Figure 1, it has means for generating an internal reference voltage, designated by the reference numeral 10, which are connected to an adjustment loop in a voltage-follower configuration.

Said adjustment loop comprises error amplifier means 11 which are connected in output to a bipolar transistor 12 of the PNP type, in which the collector terminal is connected to the ground and the emitter terminal is connected to a reference current source Iref3, which is in turn connected to the starting circuit 6.

The reference voltage generation means 10 generate a reference voltage which is equal to the intended output voltage Vout.

Additional transistors Q3 and A4 are respectively provided as in the case shown in Figure 1.

Current sources Iref1 and Iref2 are connected to the starting circuit 6, as in the case shown in Figure 2.

However, as clearly shown, the external diode D5 and the external resistors RA and RB are no longer present in this case.

In the error amplifier means 11, the inverting terminal of the control loop is directly connected to the output voltage Vout.

A transistor Q1 is connected to the input supply voltage Vin by means of its emitter terminal and to the starting circuit 6 by means of its collector terminal.

A resistor RST is interposed between the base terminal of the transistor Q1 and the output terminal of the voltage Vout.

Said output terminal is also connected dynamically to. the ground by means of a capacitor C and is statically connected by means of the load constituted for example by a battery, as shown in Figure 1.

A current source Iref4 is connected between the emitter terminal of the transistor Q4 and the starting circuit 6.

Said current source Iref4 is activated directly by the starting circuit 6 and constitutes an active load for the transistor Q4, so as to allow the operation of the regulator 1 also in the absence of an external load, at the same time avoiding the introduction of a resistive path which is typical of the output divider (reference should be made to the resistors RA and RB of Figure 1) and is detrimental when current flows from the battery toward the linear regulator 1.

The transistor Q1, whose junction is series-connected to the branch of the starting circuit 6, constitutes a switch which prevents the starting block 6 from switching on when current flows from the battery, due to the already-mentioned Zener breakdown of the emitter-base junctions which affects the transistor Q3 and the transistor Q4.

In particular, if mains voltage is present, the application of the voltage Vin saturates the transistor Q1, which is of the PNP type, because its emitter-base junction is forward-biased by the resistor RST connected to the output terminal of Vout, which as shown is dynamically connected to the ground by means of the capacitor C and is statically connected by means of the load.

In this manner, the starting circuit 6 is activated, the regulator 1 starts to operate and continues to keep the transistor Q1 on owing to the difference in potential between Vin and Vout.

Viceversa, when the input voltage Vin is left to float and a voltage on the terminal Vout is applied by the reference voltage generation means 10, the transistor Q1 is off and prevents the starting circuit 6 from starting, thus blocking any resistive path which might be responsible for the second component of the mentioned reverse current.

The portion shown in dashed lines in Figure 3 illustrates the circuit configuration of the regulator 1 according to the invention, in comparison with the circuit solution shown in Figure 2.

In this manner it is possible to fully integrate the regulator 1, since the diode D5 and the resistors RA and RB are no longer present.

The proposed solution allows to provide a fixed-voltage linear regulator with Darlington NPN output stage, characterized by a very low reverse current and therefore suitable for example for applications for providing the floating power supply of lead batteries.

However, the solution described according to the invention does not entail the penalization of electrical and thermal performance observed in conventional regulator circuits, such as the one shown in Figure 2.

In practice it has been observed that the linear regulator according to the invention fully achieves the intended aim and objects, since it allows to fully integrate the regulator because the output blocking diode D5 and the voltage divider constituted by the resistors RA and RB have been eliminated.

The linear regulator thus conceived is susceptible of numerous modifications and variations, all of which are intended to be within the scope of the invention, as defined in the appended claims.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A linear regulator with Darlington bipolar output stage, comprising:
a starting circuit (6), which is connected to a voltage input terminal (Vin) of said regulator and is suitable to drive a first current source (I_{ref1}), a second current source (I_{ref2}) and a third current source (Iref3); and
an output stage having two Darlington-connected transistors (Q3, Q4);
**characterized in that**
it further comprises a reference voltage generator (10) for generating a reference voltage whose value is equal to a chosen output voltage value (Vout) of said regulator, said generator being connected to a control loop (11, 12, Q3, Q4) configured as a voltage follower, said control loop comprising an error amplifier (11), wherein said error amplifier comprises a positive input terminal connected to said reference voltage generator (10) and an inverting input terminal connected to an output voltage terminal (Vₒᵤₜ) of the regulator and
**in that**
it further comprises a fourth current source (Iref4) which is driven by said starting circuit (6) and is connected between said Darlington-configuration output stage (Q3, Q4) and ground.

2. The linear regulator according to claim 1, **characterized in that** it further comprises a transistor (Q1) of the PNP type which is connected between said starting means (6) and said input terminal (Vin) of the regulator.

3. The regulator according to claim 1, **characterized in that** said output terminal of the regulator (Vout) is connected to the ground by means of a capacitor (C).

4. The regulator according to claim 2, **characterized in that** it comprises a resistor (RST) which is connected between said output terminal (Vout) and the base terminal of said transistor (Q1) that is connected to said starting means (6) and to said input terminal (Vin) of the regulator.

5. The regulator according to claim 1, **characterized in that** said Darlington-configuration output stage is of the NPN type.

6. The regulator according to claim 1, **characterized in that** said starting circuit (6) is connected to the noninverting terminal of said error amplifier means (11).

7. The regulator according to claim 1, **characterized in that** said transistor (Q1) connected between said starting circuit (6) and said input terminal (Vin) is connected to said input terminal by means of its emitter terminal and to said starting circuit (6) by means of its collector terminal.

## Patentansprüche

1. Linearer Regler mit einer bipolaren Darlington-Ausgangsstufe, mit
einer Startschaltung (6), die an einen Spannungseingangsanschluss (Vin) des Reglers angeschlossen und geeignet ist, um eine erste Stromquelle (Iref1), eine zweite Stromquelle (Iref2) und eine dritte Stromquelle (Iref3) zu treiben; und
einer Ausgangsstufe mit zwei Darlington-geschalteten Transistoren (Q3, Q4),
**dadurch gekennzeichnet, dass**
sie ferner einen Referenzspannungsgenerator (10) zur Erzeugung einer Referenzspannung aufweist, deren Wert gleich einem gewählten Ausgangsspannungswert (Vout) des Reglers ist, wobei er an eine als Spannungsfolger konfigurierte Steuerungsschleife (11, 12, Q3, Q4) angeschlossen ist, die einen Fehlerverstärker (11) aufweist, wobei der Fehlerverstärker einen am Referenzspannungsgenerator (10) angeschlossenen positiven Eingang und einen an einen Ausgangsspannungsanschluss (Vout) des Reglers angeschlossenen invertierenden Eingang aufweist, und
dadurch, dass
sie ferner eine vierte Stromquelle (Iref4) aufweist, die von der Startschaltung (6) getrieben und zwischen der Darlington-Ausgangsstufe (Q3, Q4) und Masse geschaltet ist.

2. Linearer Regler nach Anspruch 1, **dadurch gekennzeichnet, dass** er ferner einen Transistor (Q1) der PNP-Art aufweist, welche zwischen der Starteinrichtung (6) und dem Eingangsanschluss (Vin) des Reglers geschaltet ist.

3. Regler nach Anspruch 1, **dadurch gekennzeichnet, dass** der Ausgangsanschluss des Reglers (Vout) an die Masse über einen Kondensator (C) angeschlossen ist.

4. Regler nach Anspruch 2, **dadurch gekennzeichnet, dass** er einen Widerstand (RST) aufweist, der zwischen dem Ausgangsanschluss (Vout) und der Basis des Transistors (Q1), welcher an die Starteinrichtung (6) und den Eingangsanschluss (Vin) des Reglers angeschlossen ist, geschaltet ist.

5. Regler nach Anspruch 1, **dadurch gekennzeichnet, dass** die Darlington-Ausgangsstufe von der NPN-Art ist.

6. Regler nach Anspruch 1, **dadurch gekennzeichnet, dass** die Startschaltung (6) an den nicht-invertierenden Anschluss der Fehlerverstärkereinrichtung (11) angeschlossen ist.

7. Regler nach Anspruch 1, **dadurch gekennzeichnet, dass** der zwischen der Startschaltung (6) und dem Eingangsanschluss (Vin) geschaltete Transistor (Q1) mit seinem Emitter an den Eingangsanschluss und mit seinem Kollektor an die Startschaltung (6) angeschlossen ist.

## Revendications

1. Régulateur linéaire à étage de sortie bipolaire de type Darlington comprenant :
un circuit de démarrage (6) connecté à une borne d'entrée de tension (Vin) du régulateur et propre à piloter un premier courant de source (Iref1), un second courant de source (Iref2) et un troisième courant de source (Iref3) ; et
un étage de sortie comportant deux transistors connectés en Darlington (Q3, Q4) ;
**caractérisé en ce qu'**il comprend un générateur de tension de référence (10) pour produire une tension de référence dont la valeur est égale à une valeur de tension de sortie choisie (Vout) du régulateur, ledit générateur étant connecté à une boucle de commande (11, 12, Q3, Q4) connectée en suiveur de tension, la boucle de commande comprenant un amplificateur d'erreur (11), dans lequel l'amplificateur d'erreur comprend une borne d'entrée positive connectée au générateur de tension de référence (10) et une borne d'entrée inverseuse connectée à une borne de tension de sortie (Vout) du régulateur, et
**en ce qu'**il comprend en outre une quatrième source de courant (Iref4) qui est pilotée par le circuit de démarrage (6) et est connectée entre l'étage de sortie connecté en Darlington (Q3, Q4) et la masse.

2. Régulateur linéaire selon la revendication 1, **caractérisé en ce qu'**il comprend en outre un transistor (Q1) de type PNP qui est connecté entre le moyen de démarrage (6) et la borne d'entrée (Vin) du régulateur.

3. Régulateur selon la revendication 1, **caractérisé en ce que** la borne de sortie du régulateur (Vout) est connectée à la masse par un condensateur (C).

4. Régulateur selon la revendication 2, **caractérisé en ce qu'**il comprend une résistance (RST) qui est connectée entre la borne de sortie (Vout) et la borne de base du transistor (Q1) qui est connectée au moyen de démarrage (6) et à la borne d'entrée (Vin) du régulateur.

5. Régulateur selon la revendication 1, **caractérisé en ce que** l'étage de sortie connecté en Darlington est du type NPN.

6. Régulateur selon la revendication 1, **caractérisé en ce que** le circuit de démarrage (6) est connecté à la borne non inverseuse du moyen amplificateur d'erreur (11).

7. Régulateur selon la revendication 1, **caractérisé en ce que** le transistor (Q1), connecté entre le circuit de démarrage (6) et la borne d'entrée (Vin), est connecté à la borne d'entrée par sa borne d'émetteur et au circuit de démarrage (6) par sa borne de collecteur.
